# EUROPEAN PATENT APPLICATION

(11) **EP 4 270 358 A1**
(43) Date of publication of application: **01.11.2023**
(21) Application number: 23162213.5
(22) Date of filing: 16.03.2023
(51) Int. Cl.: G08G 1/16, B60W 30/09, B60W 30/095, B60W 30/12, B60W 30/165, B60W 50/00, B60W 60/00, G05D 1/00

(54) **LEVERAGING VEHICLE-TO-EVERYTHING (V2X) FOR HOST VEHICLE TRAJECTORIES**

(30) Priority: 25.04.2022 US 202217660533
(71) Applicant: Aptiv Technologies Limited, St. Michael (BB)
(72) Inventor: Kosiak, Walter K., Kokomo, IN, 46902 (US); Hedges, Christopher A., Greentown, IN, 46936 (US)
(74) Representative: Manitz Finsterwald Patent- und Rechtsanwaltspartnerschaft mbB

(57) **Abstract**

The methods and systems herein enable leveraging V2X for host vehicle trajectories. A host vehicle broadcasts a trajectory request that is received by a remote system. The remote system determines that a tracked obj ect being tracked by the remote system corresponds to the host vehicle and determines a trajectory of the tracked object. The remote system sends a response to the host vehicle indicating the trajectory of the tracked object as a trajectory of the host vehicle. The host vehicle calculates scores for one or more safety metrics for the received trajectory and an internally generated trajectory (e.g., using separate hardware components). Based on the scores, the host vehicle selects from among the trajectories or generates a trajectory and sends the selected/generated trajectory to a vehicle system such that the vehicle system can operate the host vehicle according to the selected/generated trajectory.

## Description

### BACKGROUND

Semi-autonomous and autonomous driving technologies are increasingly being implemented in vehicles. Such technologies enable vehicles to adjust speeds, apply brakes, and steer. Many of these technologies rely on determinations of vehicle trajectories (e.g., pose, speed, acceleration, heading, yaw rate) to ensure safe and reliable operation. The trajectories are often calculated onboard host vehicles, which renders them susceptible to errors because of vehicle faults (e.g., power loss, hardware failure, software failure, malware, tampering).

### SUMMARY

This document is directed to techniques and hardware for leveraging V2X for host vehicle trajectories. The techniques may include one or more methods for leveraging V2X for host vehicle trajectories. The hardware may include means (e.g., one or more processors) of performing leveraging V2X for host vehicle trajectories. The hardware may also include computer-readable media (e.g., non-transitory storage media) comprising instructions that, when executed, cause one or more associated systems to perform leveraging V2X for host vehicle trajectories. V2X, as used herein, is intended to encompass any suitable communication techniques usable by vehicles (e.g., V2X, V2V, C-V2X, C-C2V, dedicated short range communications (DSRC), 5G, WiFi^{®}). This disclosure should not be limited to a single standard or version or communication technology.

Some aspects described below include a method. The method includes receiving a trajectory request for a trajectory of a host vehicle that is traveling along a roadway. The method further includes determining, based on the trajectory request, that a tracked object being tracked corresponds to the host vehicle and determining a trajectory of the tracked object. The method also includes sending, to the host vehicle system, a response to the trajectory request indicating the trajectory of the tracked object as the trajectory of the host vehicle.

Some aspects described below include another method. The other method includes generating an internal trajectory for a host vehicle that is traveling along a roadway. The other method further includes broadcasting a trajectory request for a trajectory of the host vehicle. The other method further includes receiving a response to the trajectory request indicating the trajectory of the host vehicle. The other method also includes scoring, based on one or more safety criteria, the internal trajectory and the received trajectory. The other method further includes selecting, based on the scoring, the internal trajectory or the trajectory as a selected trajectory and outputting, to a vehicle system of the host vehicle, the selected trajectory effective to cause the vehicle system to control the host vehicle according to the selected trajectory.

Some aspects described below include one or more components and/or one or more systems comprising one or more processors configured to perform the above methods, portions thereof, and/or other methods, flows, and techniques described below. Some aspects described below also include computer-readable media (e.g., non-transitory storage media) including instructions that, when executed (e.g., by the processors of the components and/or systems), implement the above methods, portions thereof, and/or other methods, flows, and techniques described below.

This Summary introduces simplified concepts of leveraging V2X for host vehicle trajectories that are further described in the Detailed Description and Drawings. This Summary is not intended to identify essential features of the claimed subject matter, nor is it intended for use in determining the scope of the claimed subject matter.

### BRIEF DESCRIPTION OF THE DRAWINGS

Systems and methods of leveraging V2X for host vehicle trajectories are described with reference to the following drawings that use some of the same numbers throughout to reference like or examples of like features and components.
Fig. 1 illustrates, in accordance with this disclosure, an example environment where leveraging V2X for host vehicle trajectories may be used and an example flow of leveraging V2X for host vehicle trajectories.
Fig. 2 illustrates, in accordance with this disclosure, a broader view of the example environment of Fig. 1.
Fig. 3 illustrates, in accordance with this disclosure, an example of a host vehicle system configured for leveraging V2X for host vehicle trajectories.
Fig. 4 illustrates, in accordance with this disclosure, an example of a remote system configured for leveraging V2X for host vehicle trajectories.
Fig. 5 illustrates, in accordance with this disclosure, a more detailed example of the example flow of Fig. 1.
Fig. 6 illustrates, in accordance with this disclosure, an example flow of selecting/generating the trajectory as shown in Figs. 1 and 5.
Fig. 7 illustrates, in accordance with this disclosure, an example method performed by the host vehicle system of leveraging V2X for host vehicle trajectories.
Fig. 8 illustrates, in accordance with this disclosure, an example method performed by the remote system of leveraging V2X for host vehicle trajectories.

### DETAILED DESCRIPTION

### Overview

Vehicle trajectories are used in a variety of driving technologies (e.g., semi-autonomous and autonomous driving). For example, a lane centering function of a host vehicle may calculate steering inputs based on calculated trajectories of the host vehicle. As such, generating reliable and accurate trajectories is important for ensuring that vehicles perform as expected while not compromising safety of those in and/or around the host vehicles.

Host vehicle trajectories are often calculated by the host vehicle (e.g., on a vehicle processor rather than a processor of a remote system), many times by a single execution path and/or by a single piece of hardware. Without redundancies, such systems may be susceptible to faults (e.g., power loss, hardware failure, software failure, malware, tampering). Even redundant software and/or hardware may produce equally poor results. For example, if raw sensor data is bad, redundant systems may merely produce multiple bad trajectories.

V2X communication allows for data communication between vehicles and other electronic systems (other vehicles, infrastructure, traffic control devices, bicycles, mobile devices). Conventional uses for V2X have been limited in their applications. For example, V2X may be used to communicate vehicle poses between vehicles. While such information may be useful to driving technologies of host vehicles, it generally does not rectify the vulnerabilities discussed above.

The methods and systems herein enable leveraging V2X for host vehicle trajectories. A host vehicle broadcasts a trajectory request that is received by a remote system. The remote system determines that a tracked object being tracked by the remote system corresponds to the host vehicle and determines a trajectory of the tracked object. The remote system sends a response to the host vehicle indicating the trajectory of the tracked object as a trajectory of the host vehicle. The host vehicle calculates scores for one or more safety metrics for the received trajectory and an internally generated trajectory (e.g., using separate hardware components). Based on the scores, the host vehicle selects from among the trajectories or generates a trajectory and sends the selected/generated trajectory to a vehicle system such that the vehicle system can operate the host vehicle according to the selected/generated trajectory.

By requesting and receiving the trajectory via V2X communication to/from the remote system, the host vehicle can enable a redundancy that has not been leveraged in conventional techniques. Because the trajectory has not been calculated by the host system (although the internally generated trajectory has been), a fault that may propagate through even redundant systems of the host vehicle can be mitigated. Doing so allows for robust and accurate trajectories such that downstream operations/functions can operate as designed with increased safety.

### Example Environment

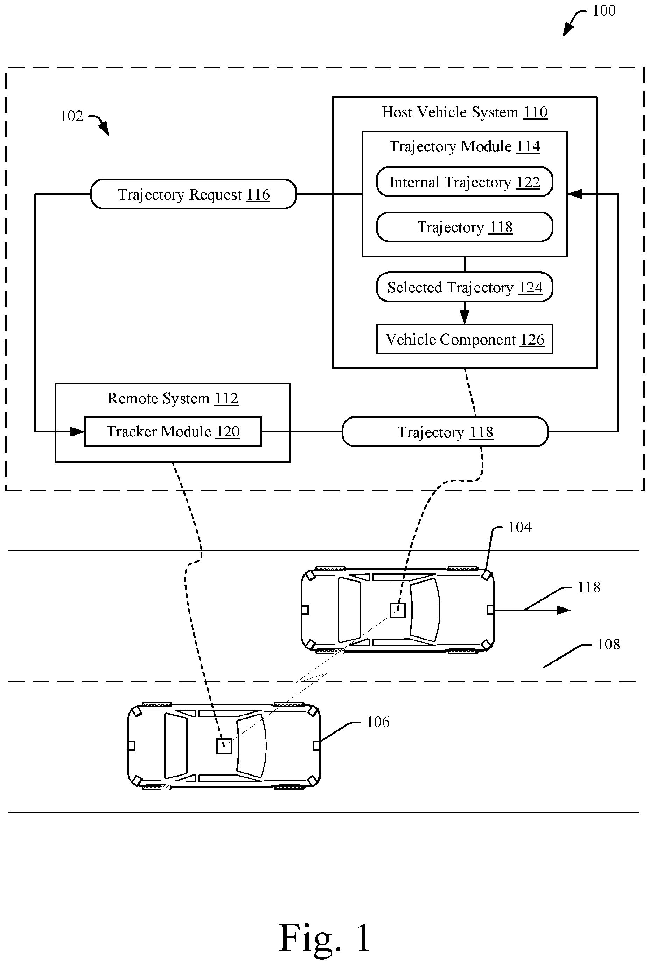

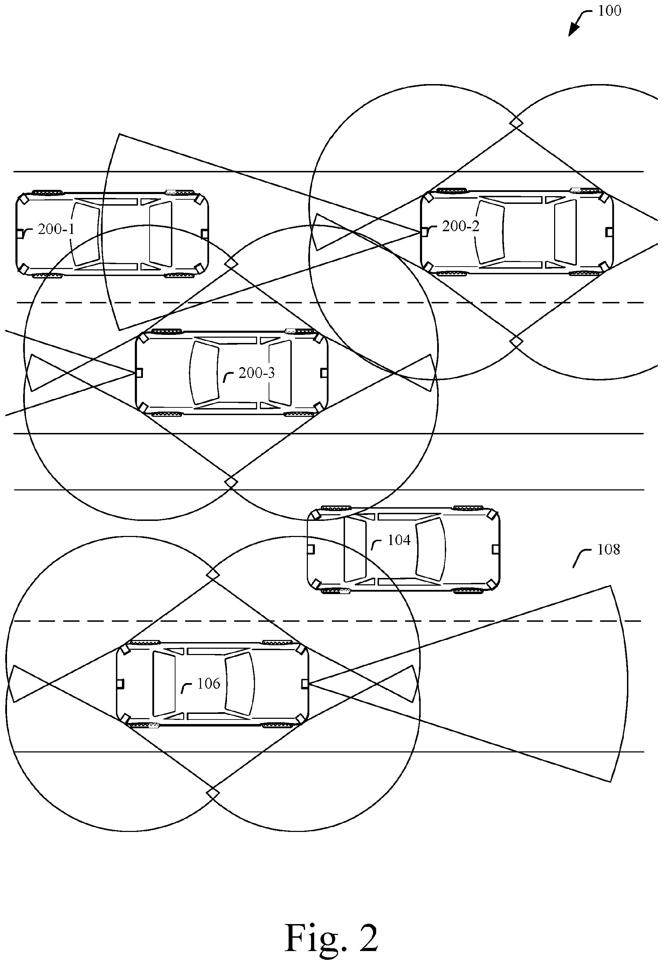

Figs. 1 and 2 illustrate an example environment 100 where leveraging V2X for host vehicle trajectories may be used. Fig. 1 also illustrates an example flow 102 of leveraging V2X for host vehicle trajectories. The example environment 100 contains a host vehicle 104 and a remote vehicle 106 that are traveling in a roadway 108. Although shown as an automobile, the host vehicle 104 may be any type of object that can utilize trajectories (taxi, car, truck, motorcycle, e-bike, boat, air vehicle, and so on). The host vehicle 104 contains a host vehicle system 110, and the remote vehicle 106 contains a remote system 112. The host vehicle system 110 and the remote system 112 collectively perform leveraging V2X for host vehicle trajectories. Although shown as being contained within the remote vehicle 106, the remote system 112 may be disposed within any object with object tracking capabilities (truck, road, road sign, building, traffic control device, overpass, and so on).

The host vehicle system 110 contains a trajectory module 114 that broadcasts a trajectory request 116 via a V2X communication. For example, the trajectory request 116 may be part of a basic safety message (BSM). The trajectory request 116 contains a request for a trajectory 118 of the host vehicle 104, as determined from a remote source (e.g., the remote system 112). The trajectory request 116 may be recipient-independent, i.e., not to any particular entity.

The remote system 112 receives the trajectory request 116 from the host vehicle system 110 and uses a tracker module 120 to determine the trajectory 118 of the host vehicle 104. To do so, the tracker module 120 may determine that an obj ect being tracked by the tracker module 120 corresponds to the host vehicle 104. The tracker module 120 may track objects using any known sensors and techniques (e.g., camera, radar, lidar, ultrasound, triangulation, machine learning).

The tracker module 120 then determines a trajectory of the object. For example, the trajectory of the object may already be determined because it is being tracked, or the tracker module 120 may determine the trajectory of the object responsive to receiving the trajectory request 116 and identifying the object. The trajectory may indicate a determined pose, acceleration, yaw rate, or projected path of the host vehicle 104. The tracker module 120 then sends a response to the trajectory request 116 to the host vehicle system 110 via V2X communication. For example, the tracker module 120 may send an indication of the trajectory of the object as the trajectory 118 to the host vehicle system 110.

The trajectory module 114 receives the trajectory 118 and compares it with an internal trajectory 122. The internal trajectory 122 may be generated by the trajectory module 114 by one or more pieces of hardware and using one or more algorithms based on local or remote sensor data. For example, redundant systems and/or algorithms may generate multiple internal trajectories to generate the internal trajectory 122 (e.g., through averaging, rounding, comparison, etc.). Furthermore, multiple systems and/or algorithms may generate two or more internal trajectories (e.g., the internal trajectory 122 and a secondary internal trajectory).

To compare the trajectory 118 to the internal trajectory 122, the trajectory module 114 may score each of the trajectories (e.g., based on one or more safety metrics). Based on the comparison (e.g., the scores), the trajectory module 114 selects (e.g., from the internal trajectory 122 or the trajectory 118) or generates a selected trajectory 124. For example, the trajectory module 114 may select the trajectory with the higher score as the selected trajectory 124. The trajectory module 114 may also select the internal trajectory 122 as the selected trajectory 124 if the score of the trajectory 118 is close to the score of the internal trajectory 122. The trajectory module 114 may also select the trajectory 118 as the selected trajectory 124 if a fault is determined in the generation or scoring of the internal trajectory 122.

The trajectory module 114 may also generate, form, or calculate the selected trajectory 124 based on one or more of the internal trajectory 122 or the trajectory 118 (e.g., based on the scoring/comparison). For example, the selected trajectory 124 may be generated based on a modification of the internal trajectory 122 or the trajectory 118 or a combination of the internal trajectory 122 and the trajectory 118. The selected trajectory 124 may represent an offset or correction applied to the trajectory 118 or the trajectory 122. Generally, any number of techniques of selecting or generating a trajectory from multiple possible trajectories may be used by the trajectory module 114.

The selected trajectory 124 is then output for receipt by a vehicle component 126 that is configured to use the selected trajectory 124 for one or more vehicle operations. For example, the vehicle component 126 may be an advanced driver assist system (ADAS), a safety function or system, a semi-autonomous function or system, or an autonomous function or system.

Fig. 2 illustrates a broader example of the example environment 100. As in Fig. 1, the host vehicle 104 is traveling along the roadway 108 with the remote vehicle 106 proximate the host vehicle 104. In order for the remote vehicle 106 to respond to the trajectory request 116, the host vehicle 104 should be within one or more sensor ranges of the remote vehicle 106. Example sensor ranges are shown surrounding the remote vehicle 106. It can be seen that the host vehicle 104 is within sensor range of the remote vehicle 106, thus, the remote vehicle 106 can respond to the trajectory request 116.

Because the trajectory request 116 is broadcast, it may be received by multiple vehicles. In the illustrated example, other remote vehicles 200 are shown within a transmission range of the trajectory request 116. Some of the other remote vehicles 200 may not be able to receive the request, not be able to respond to the trajectory request 116, or make a determination not to respond to the trajectory request 116. For example, other remote vehicle 200-1 may not have V2X capabilities, and thus, not receive the trajectory request 116 (and thus, not respond to the trajectory request 116). Alternatively, other remote vehicle 200-1 may have V2X capabilities, but no sensors usable to respond to the trajectory request 116. Other remote vehicle 200-2 may receive the trajectory request 116 and determine that the host vehicle 104 is out of a tracking range. Thus, remote vehicle 200-2 may not respond to the trajectory request 116. Other remote vehicle 200-3 may receive the trajectory request 116, determine that the host vehicle 104 is being tracked, but decide not to respond to the trajectory request 116 based on traveling in the opposite direction.

Any number of techniques may be used by the remote system 112 (e.g., when disposed in the remote vehicle 106 and the other remote vehicles 200-2 and 200-3) to determine when to respond to the trajectory request 116. For example, the remote system 112 may determine a number of connected vehicles that are within its communication range. Alternatively or in conjunction, the remote system 112 may prioritize trajectory requests 116 from closer host vehicles 104 or respond to trajectory requests 116 from host vehicles 104 that are within a certain distance of the remote system 112. The distances may be based on a received signal strengths (e.g., received signal strength indicator (RSSI), reference signal receive power (RSRP)) corresponding to the trajectory requests 116.

The remote system 112 may also communicate with other remote systems 112 to determine which of the remote systems 112 should respond to the trajectory request 116. For example, remote systems 112 within communication range of each other may become a coordination group that can decide one or more of the remote systems 112 that should respond. Although this disclosure is directed towards a single trajectory 118, the host vehicle system 110 may receive a plurality of trajectories 118 from respective remote systems 112.

The remote system 112 may also decide to respond based on a heading and/or orientation of the host vehicle 104 and the remote vehicle 106. For example, the remote system 112 may decide to respond to the trajectory request 116 responsive to determining that the host vehicle 104 is traveling in a same direction as the remote vehicle 106 or that the host vehicle 104 is traveling towards the remote vehicle 106. Conversely, the remote system 112 may decide to not respond to the trajectory request 116, responsive to determining that the host vehicle 104 is traveling away from the remote vehicle 106. The decisions may be performed with or without determining whether the host vehicle 104 is being tracked by the remote system 112 (e.g., based solely on a received pose from the host vehicle 104).

By utilizing V2X to obtain a redundant trajectory from the remote system 112, the trajectory module 114 obtains a trajectory that has not been internally calculated (e.g., trajectory 118). Doing so allows for another level of redundancy that is not available with conventional techniques. Thus, the vehicle component 126 receives more reliable and accurate trajectories, which may increase safety and functionality of the vehicle component 126.

### Example Systems

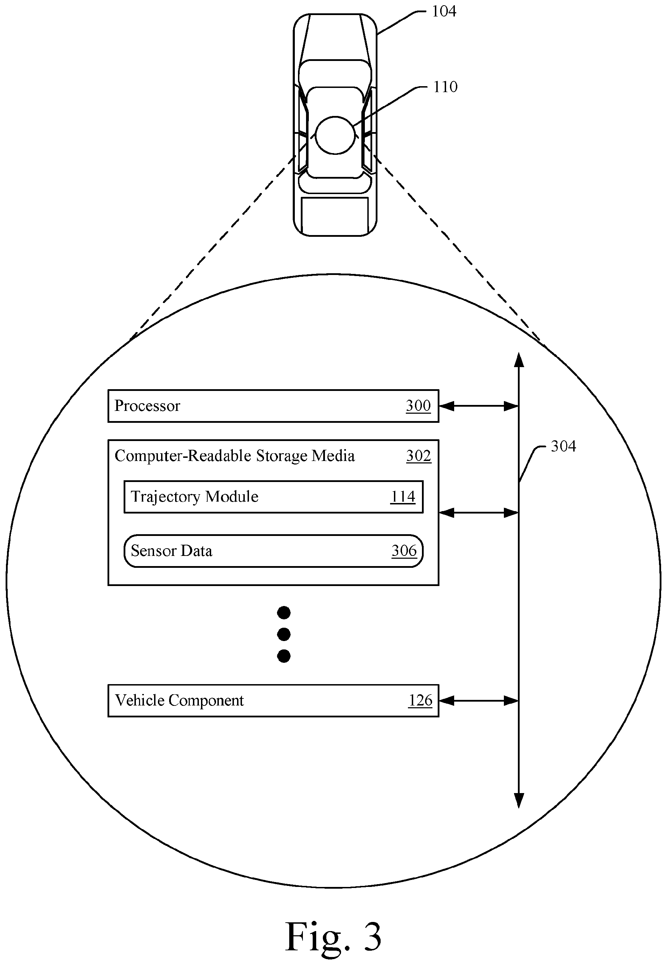

Fig. 3 illustrates an example of the host vehicle system 110. Components of the host vehicle system 110 may be arranged anywhere within or on the host vehicle 104. The host vehicle system 110 may include at least one processor 300, computer-readable storage media 302 (e.g., media, medium, mediums), and the vehicle component 126. The components are operatively and/or communicatively coupled via a link 304.

The processor 300 (e.g., application processor, microprocessor, digital-signal processor (DSP), controller) is coupled to the computer-readable storage media 302 via the link 304 and executes computer-executable instructions (e.g., code) stored within the computer-readable storage media 302 (e.g., non-transitory storage device such as a hard drive, solid-state drive (SSD), flash memory, read-only memory (ROM)) to implement or otherwise cause the trajectory module 114 (or a portion thereof) to perform the techniques described herein. Although shown as being within the computer-readable storage media 302, the trajectory module 114 may be a stand-alone component (e.g., having dedicated computer-readable storage media comprising instructions and/or executed on dedicated hardware, such as a dedicated processor, preprogrammed field-programmable-gate-array (FPGA), system on chip (SOC), and the like). The processor 300 and the computer-readable storage media 302 may be any number of components, comprise multiple components distributed throughout the host vehicle 104, located remote to the host vehicle 104, dedicated or shared with other components, modules, or systems of the host vehicle 104, and/or configured differently than illustrated without departing from the scope of this disclosure.

The computer-readable storage media 302 also contains sensor data 306 generated by one or more sensors or types of sensors (not shown) that may be local or remote to the host vehicle system 110. The sensor data 306 indicates or otherwise enables the determination of information usable to perform the techniques described herein. For example, the sensors may generate sensor data 306 indicative of aspects usable to determine the internal trajectory 122 and to select the selected trajectory 124. In some implementations, the sensor data 306 may come from a remote source (e.g., via link 204). The host vehicle system 110 may contain a communication system (not shown) that receives sensor data 306 from the remote source. The remote source may be the remote system 112 or another system.

The vehicle component 126 contains one or more systems or components that are communicatively coupled to the trajectory module 114 and configured to use the selected trajectory 124 to perform one or more vehicle functions. For example, the vehicle component 126 may comprise an ADAS or autonomous driving system with means for accelerating, steering, or slowing (e.g., stopping) the host vehicle 104. The vehicle component 126 is communicatively coupled to the trajectory module 114 via the link 304. Although shown as separate components, the trajectory module 114 may be part of the vehicle component 126 and visa-versa.

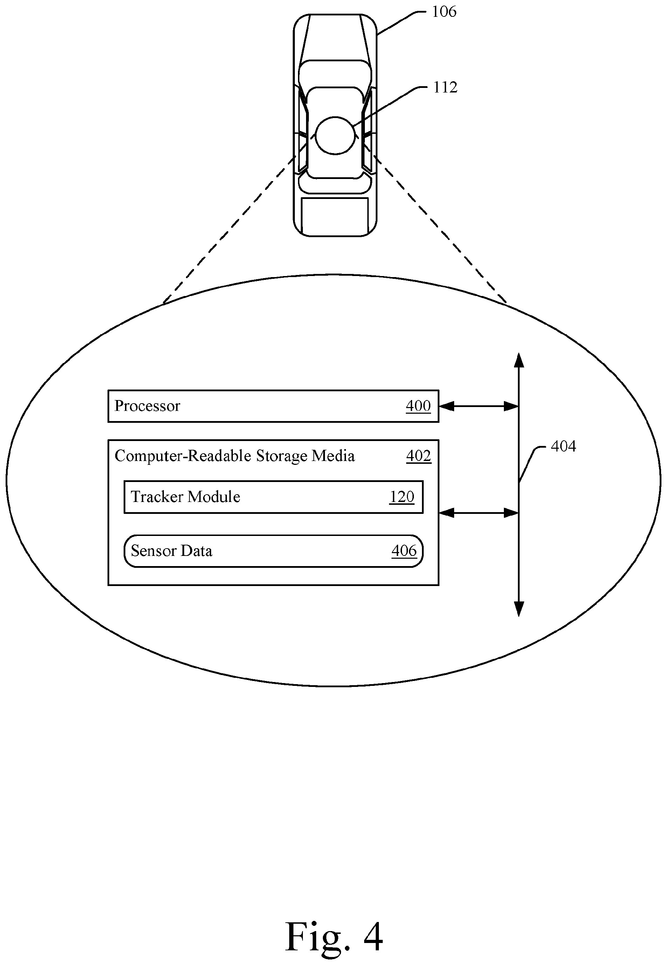

Fig. 4 illustrates an example of the remote system 112. Components of the remote system 112 may be arranged anywhere within or on the remote vehicle 106 (or other object if the remote system 112 is not disposed within a vehicle). The remote system 112 may include at least one processor 400, and computer-readable storage media 402 (e.g., media, medium, mediums). The components are operatively and/or communicatively coupled via a link 404.

The processor 400 (e.g., application processor, microprocessor, digital-signal processor (DSP), controller) is coupled to the computer-readable storage media 402 via the link 404 and executes computer-executable instructions (e.g., code) stored within the computer-readable storage media 402 (e.g., non-transitory storage device such as a hard drive, solid-state drive (SSD), flash memory, read-only memory (ROM)) to implement or otherwise cause the tracker module 120 (or a portion thereof) to perform the techniques described herein. Although shown as being within the computer-readable storage media 402, the tracker module 120 may be a stand-alone component (e.g., having dedicated computer-readable storage media comprising instructions and/or executed on dedicated hardware, such as a dedicated processor, preprogrammed field-programmable-gate-array (FPGA), system on chip (SOC), and the like). The processor 400 and the computer-readable storage media 402 may be any number of components, comprise multiple components distributed throughout the remote vehicle 106, located remote to the remote vehicle 106, dedicated or shared with other components, modules, or systems of the remote vehicle 106, and/or configured differently than illustrated without departing from the scope of this disclosure.

The computer-readable storage media 402 also contains sensor data 406 generated by one or more sensors or types of sensors (not shown) that may be local or remote to the remote system 112. The sensor data 406 indicates or otherwise enables the determination of information usable to perform the techniques described herein. For example, the sensors may generate sensor data 406 indicative of aspects usable to determine the trajectory 118. In some implementations, the sensor data 406 may come from a remote source (e.g., via link 404). The remote system 112 may contain a communication system (not shown) that receives sensor data 406 from the remote source. The remote source may be the host vehicle system 110 or another system.

Although the host vehicle system 110 and the remote system 112 are shown and described in terms of separate systems, they may be combined into a single system. For example, the host vehicle system 110 may include the tracker module 120 such that the host vehicle system 110 can act as the remote system 112 for another vehicle. Conversely, the remote system 112 may include the trajectory module 114 and the vehicle component 126 such that the remote system 112 can act as the host vehicle system 110 for the remote vehicle 106. Thus, a vehicle may act as both a requesting system and a sending system for trajectories.

### Example Flows

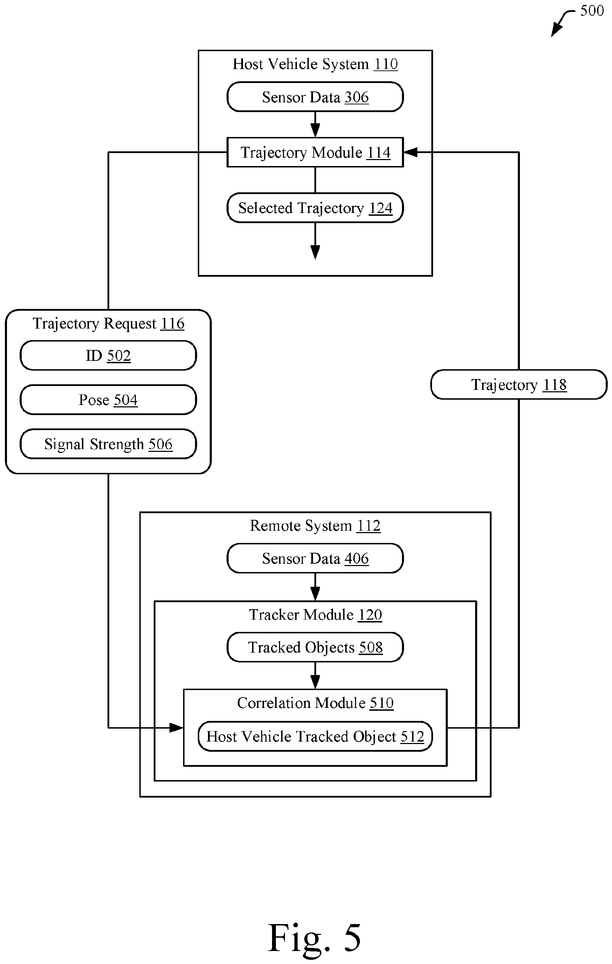

Fig. 5 is an example flow 500 of leveraging V2X for host vehicle trajectories. The example flow 500 may be implemented in any of the previously described environments and by any of the previously described systems or components. For example, the example flow 500 can be implemented in the example environment 100, by the host vehicle system 110, and/or by the remote system 112. The example flow 500 may also be implemented in other environments, by other systems or components, and utilizing other flows or techniques. The example flow 500 may be implemented by any number of entities. The order in which the operations are shown and/or described is not intended to be construed as a limitation, and the order may be rearranged without departing from the scope of this disclosure. Furthermore, any number of the operations can be combined with any other number of the operations to implement the example flow or an alternate flow.

The example flow 500 starts with the trajectory module 114 generating and broadcasting the trajectory request 116. The trajectory request 116 may contain an ID 502 of the host vehicle system 110 (e.g., a temporary ID) to identify the host vehicle system 110 from other systems that may be communicating. The trajectory request 116 can also contain a pose 504 of the host vehicle 104. The host vehicle system 110 may determine the pose 504 (e.g., based on sensor data 306) such that the trajectory module 114 can send it as part of the trajectory request 116. The trajectory request 116 also has an associated signal strength 506. The signal strength 506 is not part of the trajectory request 116, per se, but a function of how the trajectory request 116 is received (e.g., an RSSI or RSRP of a signal that carried the trajectory request 116). For example, the remote system 112 may determine the signal strength 506 of the trajectory request 116 when it is received by the remote system 112. The trajectory request 116 may be received by another remote system with a different signal strength.

At the remote system 112, the tracker module 120 uses the sensor data 406 to generate tracked objects 508. The tracked objects 508 correspond to objects proximate the remote system 112 that are being tracked by the tracker module 120. To reply to the trajectory request 116, a correlation module 510 receives the tracked objects 508 and the pose 504 to determine one of the tracked objects 508 that corresponds to the host vehicle 104 (e.g., a pose of the tracked object matches the pose 504). The tracked object then becomes a host vehicle tracked object 512. It should be noted that the host vehicle tracked object 512 is merely one of the tracked objects 508 that corresponds to the host vehicle 104.

A trajectory of the host vehicle tracked object 512 is determined and indicated as the trajectory 118. The correlation module 510 then sends the trajectory 118 (or indication thereof) to the host vehicle system 110 as a response to the trajectory request 116.

Returning to the host vehicle system 110, the trajectory module 114 receives the trajectory 118 and scores it along with the internal trajectory 122. The trajectory module 114 may use the sensor data 306 to determine the internal trajectory before, concurrently, or after generating the trajectory request 116 and/or receiving the trajectory 118. Based on the scoring, the trajectory module 114 determines the selected trajectory 124. As discussed above, the trajectory module 114 may select the internal trajectory 122 responsive to determining that a score of the trajectory 118 is within a threshold of a score of the internal trajectory 122. The trajectory module 114 may also select one or more trajectories with higher scores, select the trajectory with the highest score, or combine the trajectories in some way. Regardless, the selected trajectory 124 is output for use in downstream operations (e.g., by the vehicle component 126).

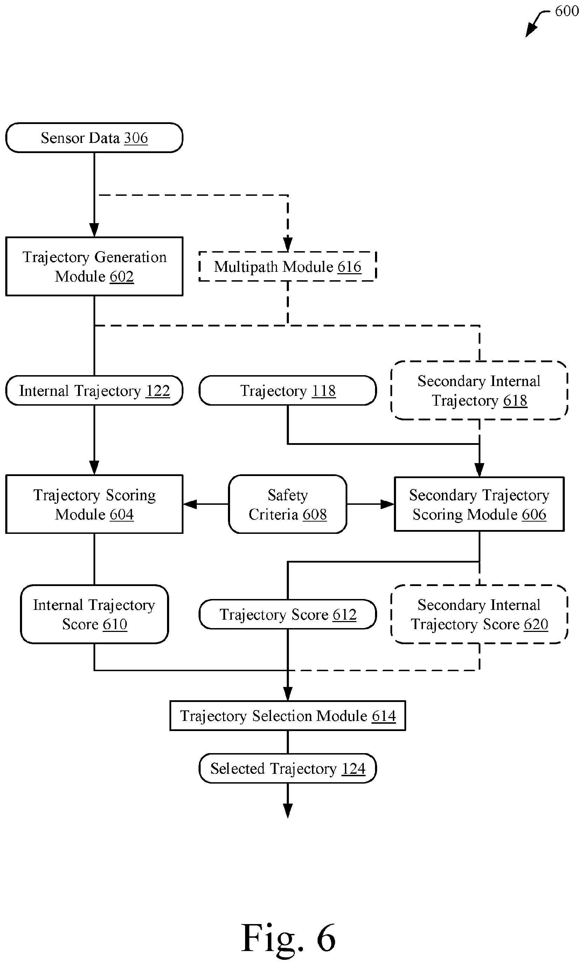

Fig. 6 is an example flow 600 of selecting the selected trajectory 124. The example flow 600 may be implemented in any of the previously described environments and by any of the previously described systems or components. For example, the example flow 600 can be implemented in the example environment 100, by the host vehicle system 110 (e.g., by the trajectory module 114), and/or as part of the example flow 500. The example flow 600 may also be implemented in other environments, by other systems or components, and utilizing other flows or techniques. The example flow 600 may be implemented by any number of entities. The order in which the operations are shown and/or described is not intended to be construed as a limitation, and the order may be rearranged without departing from the scope of this disclosure. Furthermore, any number of the operations can be combined with any other number of the operations to implement the example flow or an alternate flow.

The example flow 600 starts with the sensor data 306 being received by a trajectory generation module 602. The trajectory generation module 602 determines the internal trajectory 122 based on the sensor data 306 using any techniques known to those in the art.

The internal trajectory 122 is scored by a trajectory scoring module 604 that is configured to score trajectories, and the trajectory 118 is scored by a secondary trajectory scoring module 606 that is also configured to score trajectories. Although the trajectories are shown as being scored by respective modules, the trajectory scoring module 604 may score both the internal trajectory 122 and the trajectory 118. The secondary trajectory scoring module 606 enables another redundancy by having separate hardware (e.g., separate systems) and/or software (e.g., execution paths) determining the respective scores.

As discussed above, the timing/order of the operations may change depending upon implementation. For example, the trajectory module 114 may receive the trajectory 118 and/or score it using the secondary trajectory scoring module 606 prior to generating the internal trajectory 122 and/or prior to using the trajectory scoring module 604 to score the internal trajectory 122.

To determine the scores, the scoring modules (e.g., the trajectory scoring module 604 and/or the secondary trajectory scoring module 606) may use safety criteria 608. The safety criteria 608 may include any number of metrics. For example, the safety criteria 608 may be based on compliance to one or more dynamic limitations of the host vehicle 104 (e.g., what maneuvers the host vehicle 104 can handle safely). The safety criteria 608 may also be based on compliance to one or more legal limitations (e.g., speed limits, passing/no passing allowed, no turning). The safety criteria 608 may also be based on distance to one or more objects, obstacles, or road delimiters (e.g., along the roadway 108). The safety criteria 608 may also be based on predicted collisions with one or more objects, persons, or other vehicles (e.g., on the roadway 108) and/or predicted unintended lane or road departure (e.g., off the roadway 108).

Any of the above examples of the safety criteria 608 may be used alone or may be used in any combination with one or more others of the examples. The safety criteria 608 may comprise a series of pass/fail decisions or individual scores that are added, averaged, combined, or otherwise mathematically worked upon to generate the internal trajectory score 610 and the trajectory score 612. Furthermore, the secondary trajectory scoring module 606 may utilize different safety criteria than the trajectory scoring module 604 or use the safety criteria 608 differently than the trajectory scoring module 604.

Regardless of how/where each of the trajectories are scored, the internal trajectory 122 has an internal trajectory score 610 and the trajectory 110 has a trajectory score 612. A trajectory selection module 614 receives the internal trajectory score 610 and the trajectory score 612 and outputs the selected trajectory 124. As discussed above, any number of techniques may be used to determine the selected trajectory 124 based on the scores. For example, the trajectory selection module 614 may output the internal trajectory 122 as the selected trajectory 124 responsive to determining that the trajectory score 612 is within a threshold value of the internal trajectory score 610. If the trajectory score 612 is not within the threshold value, the trajectory selection module 614 may determine that there is a problem (e.g., an error occurred, hardware and/or software is bad, malware) and initiate a warning and/or a manual takeover of the host vehicle 104. For another example, the trajectory selection module 614 may output the trajectory with the higher score as the selected trajectory 124.

In some embodiments, a multipath module 616 may generate the internal trajectory 122 and a secondary internal trajectory 618. For example, the multipath module 616 may utilize similar or different sensor data (compared to the sensor data 306 used by the trajectory generation module 602) to create the respective trajectories via alternate execution paths. The multipath module 616 provides additional redundancy and security in that the secondary internal trajectory 618 provides a third trajectory (e.g., in addition to the internal trajectory 122 and the trajectory 118).

The secondary internal trajectory 618 is scored by the secondary trajectory scoring module 606 (as depicted) or by the trajectory scoring module 604 (not depicted) to produce a secondary internal trajectory score 620. The secondary internal trajectory score 620 may be treated similarly to the trajectory score 612. For example, the trajectory selection module 614 may pass the internal trajectory 122 as the selected trajectory 124 responsive to determining that both the trajectory score 612 and the secondary internal trajectory score 620 are within the threshold value of the internal trajectory score 610. Alternatively, the trajectory selection module 614 may determine the selected trajectory 124 as the trajectory of the three with the highest score.

### Example Methods

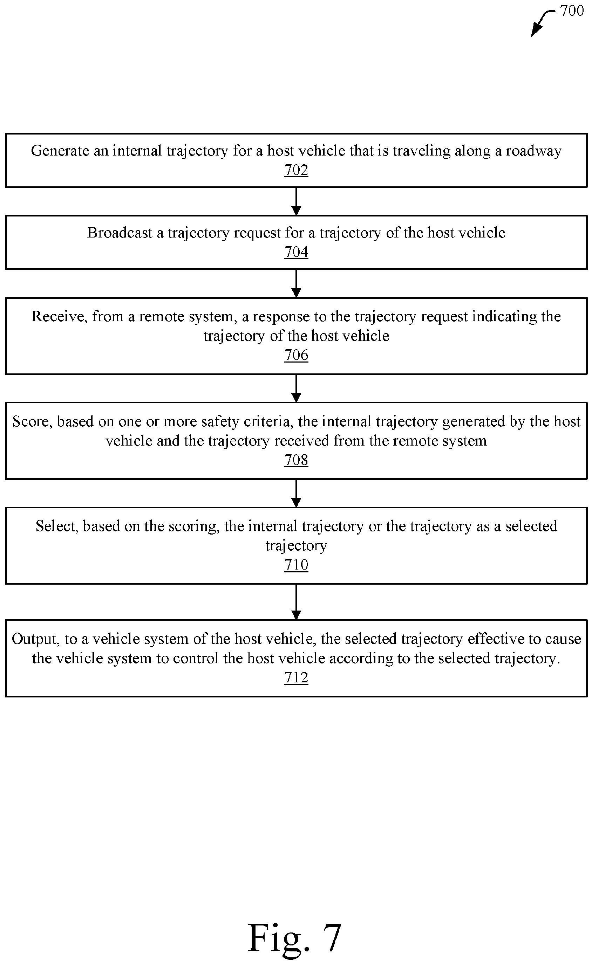

Fig. 7 is an example method 700 for leveraging V2X for host vehicle trajectories. The example method 700 may be implemented in any of the previously described environments, by any of the previously described systems or components, and by utilizing any of the previously described flows, process flows, or techniques. For example, the example method 700 can be implemented in the example environment 100, by the host vehicle system 110, and/or by following the example flows 500 and/or 600. The example method 700 may also be implemented in other environments, by other systems or components, and utilizing other flows, process flows, or techniques. Example method 700 may be implemented by one or more entities (e.g., the trajectory module 114). The order in which the operations are shown and/or described is not intended to be construed as a limitation, and the order may be rearranged without departing from the scope of this disclosure. Furthermore, any number of the operations can be combined with any other number of the operations to implement the example process flow or an alternate process flow.

At 702, an internal trajectory for a host vehicle that is traveling along a roadway is generated. For example, the trajectory generation module 602 or the multipath module 616 may generate the internal trajectory 122.

At 704, a trajectory request for a trajectory of the host vehicle is broadcast. For example, the trajectory module 114 may broadcast the trajectory request 116.

At 706, a response to the trajectory request indicating the trajectory of the host vehicle is received from a remote system. For example, the trajectory module 114 may receive the trajectory 118 from the remote system 112.

At 708, the internal trajectory and the trajectory received from the remote system is scored based on one or more safety criteria. For example, the trajectory scoring module 604 and/or the secondary trajectory scoring module 606 may score the internal trajectory 122 and the trajectory 118 based on the safety criteria 608 to produce the internal trajectory score 610 and the trajectory score 612.

At 710, the internal trajectory of the trajectory is selected as a selected trajectory based on the scoring. For example, the trajectory selection module 614 may select one of the internal trajectory 122 or the trajectory 118 as the selected trajectory 124. In some implementations, the trajectory selection module 614 may validate the internal trajectory 122 based on the trajectory score 612 (e.g., if the scores are close enough to each other then the internal trajectory 122 becomes the selected trajectory 124).

At 712, the selected trajectory is output to a vehicle system of the host vehicle effective to cause the vehicle system to control the host vehicle according to the selected trajectory. For example, the trajectory module 114 may output the selected trajectory 124 to the vehicle component 126.

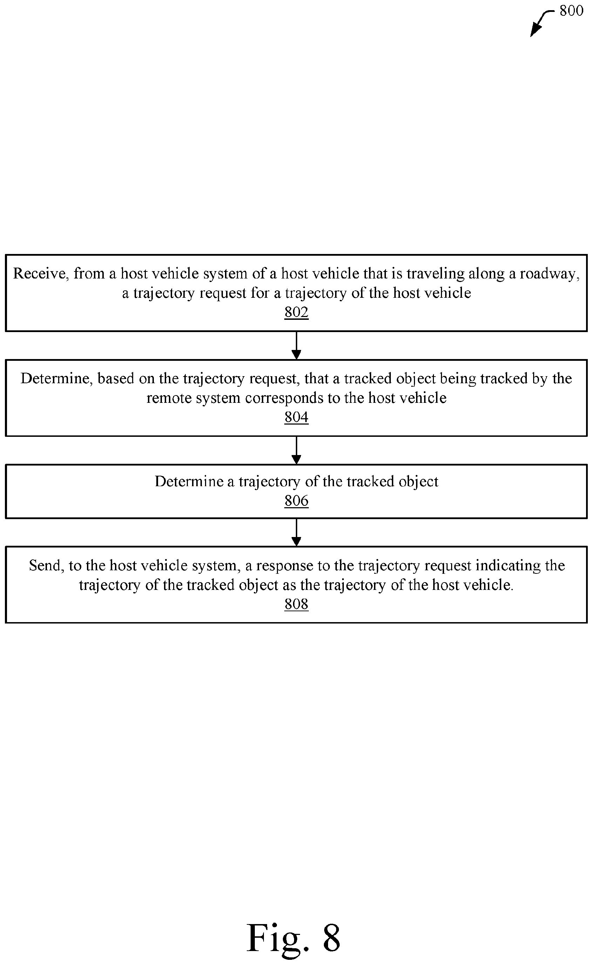

Fig. 8 is an example method 800 for leveraging V2X for host vehicle trajectories. The example method 800 may be implemented in any of the previously described environments, by any of the previously described systems or components, and by utilizing any of the previously described flows, process flows, or techniques. For example, the example method 800 can be implemented in the example environment 100, by the remote system 112, and/or by following the example flow 500. The example method 800 may also be implemented in other environments, by other systems or components, and utilizing other flows, process flows, or techniques. Example method 800 may be implemented by one or more entities (e.g., the tracker module 120). The order in which the operations are shown and/or described is not intended to be construed as a limitation, and the order may be rearranged without departing from the scope of this disclosure. Furthermore, any number of the operations can be combined with any other number of the operations to implement the example process flow or an alternate process flow.

At 802, a trajectory request for a trajectory of a host vehicle that is traveling along a roadway is received from a host vehicle system of the host vehicle. For example, the tracker module 120 (or the correlation module 510) of the remote system 112 may receive the trajectory request 116 from the host vehicle system 110.

At 804, it is determined, by the remote system 112 and based on the trajectory request, that a tracked object being tracked by the remote system corresponds to the host vehicle. For example, the correlation module 510 may determine, based on the pose 504 included in the trajectory request 116, that one of the tracked objects 508 corresponds to the host vehicle 104 and is, thus, the host vehicle tracked object 512.

At 806, a trajectory of the tracked object is determined. For example, the correlation module 510 may gather an existing trajectory of the host vehicle tracked object 512 or calculate a trajectory for the host vehicle tracked object 512.

At 808, a response to the trajectory request is sent to the host vehicle system that indicates the trajectory of the tracked object as the trajectory of the host vehicle. For example, the correlation module 510 may send the trajectory 118 to the trajectory module 114 as part of a response to the trajectory request 116. The response may indicate the ID 502 as an identifier/recipient of the response message such that the host vehicle system 110 knows that the trajectory 118 is for it.

### Further Examples

Some additional examples for leveraging V2X communications for host vehicle trajectories are provided below.

Example 1: A method comprising: receiving, by a remote system and from a host vehicle system of a host vehicle that is traveling along a roadway, a trajectory request for a trajectory of the host vehicle; determining, by the remote system and based on the trajectory request, that a tracked object being tracked by the remote system corresponds to the host vehicle; determining, by the remote system, a trajectory of the tracked object; and sending, by the remote system and to the host vehicle system, a response to the trajectory request indicating the trajectory of the tracked object as the trajectory of the host vehicle.

Example 2: The method of example 1, wherein the trajectory request indicates an ID and pose of the host vehicle.

Example 3: The method of example 2, wherein the trajectory comprises at least one of a determined pose, acceleration, yaw rate, or projected path of the host vehicle.

Example 4: The method of example 3, wherein the determining that the tracked object corresponds to the host vehicle comprises determining, by the remote system, that a pose of the tracked object corresponds to the pose received from the host vehicle.

Example 5: The method of example 4, further comprising tracking, by the remote system, a plurality of objects, wherein the tracked object is one of the objects.

Example 6: The method of example 5, wherein the tracking the objects is based on sensor data from sensors that are local to the remote system.

Example 7: The method of example 1, wherein the sending the response to the trajectory request is based on at least one of a number of vehicles communicatively coupled to the remote system, a signal strength corresponding to the trajectory request, a distance between the host vehicle and the remote system, or a direction of travel of the host vehicle.

Example 8: The method of example 1, wherein the receiving the trajectory request and the sending the response to the trajectory request are performed using a vehicle-to-everything (V2X) or dedicated short range communications (DSRC) standard.

Example 9: The method of example 1, wherein the remote system is comprised by another vehicle.

Example 10: A method comprising: generating, by a host vehicle system of a host vehicle that is traveling along a roadway, an internal trajectory; broadcasting, by the host vehicle system, a trajectory request for a trajectory of the host vehicle; receiving, by the host vehicle system and from a remote system, a response to the trajectory request indicating the trajectory of the host vehicle; scoring, by the host vehicle system and based on one or more safety criteria, the internal trajectory generated by the host vehicle and the trajectory received from the remote system; selecting, by the host vehicle system and based on the scoring, the internal trajectory or the trajectory as a selected trajectory; and outputting, by the host vehicle system and to a vehicle system of the host vehicle, the selected trajectory effective to cause the vehicle system to control the host vehicle according to the selected trajectory.

Example 11: The method of example 10, wherein the safety criteria comprise one or more of: compliance to one or more dynamic limitations of the host vehicle, compliance to one or more legal limitations, distance to one or more objects, obstacles, or road delimiters, predicted collisions with one or more objects, persons, or other vehicles, or predicted unintended lane or road departure.

Example 12: The method of example 10, wherein the broadcasting the trajectory request comprises sending the trajectory request as part of a basic safety message (BSM).

Example 13: The method of example 10, wherein the selected trajectory has a higher score than a non-selected trajectory.

Example 14: A host vehicle system configured to be disposed in a host vehicle, the host vehicle system comprising at least one processor configured to: generate, while the host vehicle is traveling along a roadway, an internal trajectory; broadcast a trajectory request for a trajectory of the host vehicle; receive, from a remote system, a response to the trajectory request indicating the trajectory of the host vehicle; score, based on one or more safety criteria, the internal trajectory and the trajectory received from the remote system; select, based on the scoring, the internal trajectory or the trajectory as a selected trajectory; and output, to a vehicle component of the host vehicle, the selected trajectory effective to cause the vehicle component to control the host vehicle according to the selected trajectory.

Example 15: The host vehicle system of example 14, wherein the host vehicle system comprises: a first hardware component configured to score the internal trajectory; and a second hardware component configured to score the trajectory.

Example 16: The host vehicle system of example 14, wherein the host vehicle system is configured to broadcast the trajectory request and receive the response to the trajectory request via a vehicle-to-everything (V2X) communications or dedicated short range communications (DSRC).

Example 17: The host vehicle system of example 16, wherein the host vehicle system is further configured to broadcast the trajectory request as part of a basic safety message (BSM).

Example 18: The host vehicle system of example 14, wherein the safety criteria comprise one or more of: compliance to one or more dynamic limitations of the host vehicle, compliance to one or more legal limitations, distance to one or more objects, obstacles, or road delimiters, predicted collisions with one or more objects, persons, or other vehicles, or predicted unintended lane or road departure.

Example 19: The host vehicle system of example 14, wherein the remote system is comprised by another vehicle.

Example 20: The host vehicle system of example 14, wherein the processor is further configured to: receive, from another host vehicle system of a remote vehicle, a trajectory request for a trajectory of the remote vehicle; determine, based on the trajectory request, that a tracked object being tracked by the host vehicle system corresponds to the remote vehicle; determine a trajectory of the tracked object; and send, to the other host vehicle system, a response to the trajectory request indicating the trajectory of the tracked object as the trajectory of the remote vehicle.

Example 21: A system comprising: at least one processor configured to perform the method of any of examples 1-13.

Example 22: Computer-readable storage media comprising instructions that, when executed, cause at least one processor to perform the method of any of examples 1-13.

Example 23: A system comprising means for performing the method of any of examples 1-13.

Example 24: A method performed by the system of any of examples 14-19.

Example 25: A method comprised by the instructions of example 20.

### Conclusion

While various embodiments of the disclosure are described in the foregoing description and shown in the drawings, it is to be understood that this disclosure is not limited thereto but may be variously embodied to practice within the scope of the following claims. From the foregoing description, it will be apparent that various changes may be made without departing from the spirit and scope of the disclosure as defined by the following claims.

The use of "or" and grammatically related terms indicates non-exclusive alternatives without limitation unless the context clearly dictates otherwise. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

## Claims

1. A method comprising:
receiving, by a remote system and from a host vehicle system of a host vehicle that is traveling along a roadway, a trajectory request for a trajectory of the host vehicle;
determining, by the remote system and based on the trajectory request, that a tracked object being tracked by the remote system corresponds to the host vehicle;
determining, by the remote system, a trajectory of the tracked object; and
sending, by the remote system and to the host vehicle system, a response to the trajectory request indicating the trajectory of the tracked object as the trajectory of the host vehicle.

2. The method of claim 1, wherein the trajectory request indicates an ID and pose of the host vehicle.

3. The method of claim 2, wherein the trajectory comprises at least one of a determined pose, acceleration, yaw rate, or projected path of the host vehicle.

4. The method of claim 3, wherein the determining that the tracked object corresponds to the host vehicle comprises determining, by the remote system, that a pose of the tracked object corresponds to the pose received from the host vehicle.

5. The method of claim 4, further comprising tracking, by the remote system, a plurality of objects, wherein the tracked object is one of the objects.

6. The method of claim 5, wherein the tracking the objects is based on sensor data from sensors that are local to the remote system.

7. The method of any preceding claim, wherein the sending the response to the trajectory request is based on at least one of a number of vehicles communicatively coupled to the remote system, a signal strength corresponding to the trajectory request, a distance between the host vehicle and the remote system, or a direction of travel of the host vehicle.

8. The method of any preceding claim, wherein the receiving the trajectory request and the sending the response to the trajectory request are performed using a vehicle-to-everything (V2X) or dedicated short range communications (DSRC) standard.

9. The method of any preceding claim, wherein the remote system is comprised by another vehicle.

10. A method comprising:
generating, by a host vehicle system of a host vehicle that is traveling along a roadway, an internal trajectory;
broadcasting, by the host vehicle system, a trajectory request for a trajectory of the host vehicle;
receiving, by the host vehicle system and from a remote system, a response to the trajectory request indicating the trajectory of the host vehicle;
scoring, by the host vehicle system and based on one or more safety criteria, the internal trajectory generated by the host vehicle and the trajectory received from the remote system;
selecting, by the host vehicle system and based on the scoring, the internal trajectory or the trajectory as a selected trajectory; and
outputting, by the host vehicle system and to a vehicle system of the host vehicle, the selected trajectory effective to cause the vehicle system to control the host vehicle according to the selected trajectory.

11. The method of claim 10, wherein the safety criteria comprise one or more of:
compliance to one or more dynamic limitations of the host vehicle,
compliance to one or more legal limitations,
distance to one or more objects, obstacles, or road delimiters,
predicted collisions with one or more objects, persons, or other vehicles, or
predicted unintended lane or road departure.

12. The method of claim 10 or 11, wherein the broadcasting the trajectory request comprises sending the trajectory request as part of a basic safety message (BSM).

13. The method of any of claims 10-12, wherein the selected trajectory has a higher score than a non-selected trajectory.

14. The method of any of claims 10-13, wherein the remote system is comprised by another vehicle.

15. A system comprising at least one processor configured to perform the method of any preceding claim.
